# EUROPÄISCHE PATENTSCHRIFT

(11) **EP 2 506 995 B1**
(45) Veröffentlichungstag und Bekanntmachung des Hinweises auf die Patenterteilung: **17.12.2014**
(21) Anmeldenummer: 10803067.7
(22) Anmeldetag: 30.11.2010
(51) Int. Cl.: B21D 43/10, B21D 43/11, B25J 9/10, B25J 18/02

(54) **TRANSPORTEINRICHTUNG**
TRANSPORT UNIT
DISPOSITIF DE TRANSPORT

(30) Priorität: 01.12.2009 DE 202009015682 U
(43) Veröffentlichungstag der Anmeldung: 10.10.2012
(73) Patentinhaber: KUKA Systems GmbH, 86165 Augsburg (DE)
(72) Erfinder: CHO, Yong-Hak, 86494 Emersacker (DE); HOLECEK, Thomas, 86720 Nördlingen (DE); GASTL, Matthias, 85276 Pfaffenhofen (DE); HENNEKE, Thomas, 86971 Peiting (DE); MOCKER, Sebastian, 86152 Augsburg (DE)
(74) Vertreter: Ernicke, Klaus Stefan
(86) Internationale Anmeldenummer: PCT/EP2010/068555
(87) Internationale Veröffentlichungsnummer: WO 2011/067260

(56) Entgegenhaltungen:
- EP-A1- 0 502 233
- DE-U1-202007 010 097
- GB-A- 2 174 065
- GB-A- 2 312 414
- JP-A- 8 141 969
- JP-A- 2006 130 518

## Beschreibung

Die Erfindung betrifft eine Transporteinrichtung für Werkstücke, insbesondere Blechteile, mit den Merkmalen im Oberbegriff des Hauptanspruchs.

Eine solche Transporteinrichtung ist aus der JP 2006-130518 A bekannt. Sie offenbart eine Transporteinrichtung für Blechteile zwischen benachbarten Pressen. Die Transporteinrichtung weist einen mehrachsigen Roboter mit einem Greifwerkzeug auf. Der Roboter führt eine steuerbare Transfereinrichtung, die eine Vorschub- und Schwenkeinrichtung für das Greifwerkzeug sowie einen Werkzeugträger beinhaltet, der an einem vom Roboter gehaltenen Tragbalken linear verschiebbar und schwenkbar angeordnet ist. Die Schwenkeinrichtung für den Werkzeugträger hat dabei eine vertikale und quer zum Tragbalken gerichtete Schwenkachse. Hierdurch kann das gegriffene Blechteil in seiner Hauptebene gedreht und an Hindernissen im Pressenbereich vorbei bewegt werden.

Die DE 20 2007 010 097 U1 zeigt eine andere Transporteinrichtung für Blechteile zwischen benachbarten Pressen. Die von einem Roboter geführte Transfereinrichtung besitzt eine Vorschubeinrichtung, die einen Schlitten mit dem daran starr befestigten Greifwerkzeug, einen Linearmotor, eine Basisplatte zur Befestigung an der Roboterhand und eine Antriebskopplung zwischen der Platine und dem Schlitten aufweist. Der Schlitten und das Greifwerkzeug führen ausschließlich lineare Relativbewegungen gegenüber der Roboterhand aus.

Die JP 08-141969 A zeigt eine ähnliche Transporteinrichtung für Blechteile zwischen benachbarten Pressen mit einem mehrachsigen Roboter und einer vom Roboter geführten Transfereinrichtung. Diese weist eine Vorschubeinrichtung auf, die einen Schlitten mit dem daran starr befestigten Greifwerkzeug ausschließlich translatorisch relativ zur Roboterhand bewegt.

Eine andere Transporteinrichtung für Blechteile ist aus der DE 202 16 013 U1 bekannt. Sie ist als Pressentransfersystem ausgebildet, mit dem Blechteile zwischen benachbarten Blechpressen einer Pressenstraße transportiert werden. Die Transporteinrichtung weist einen mehrachsigen Roboter mit einem Greifwerkzeug auf. Das Greifwerkzeug ist an einem an der Roboterhand drehfest und verschiebefest angeflanschten Ausleger endseitig angeordnet und kann über eine Schubstange um eine Hochachse am Auslegerende bei Bedarf gedreht werden. Der Roboter kann mit dem schwenkbaren Ausleger in die Pressen fassen und dort die Blechteile aufnehmen oder abgeben, wobei die Roboterhand außerhalb der Presse bleiben kann. Beim Werkstücktransport zwischen den Pressen kann das Werkstück am Ende des Auslegers gedreht werden. Der Roboter führt beim Werkstücktransport Hubbewegungen und horizontale Schwenkbewegungen aus und transportiert das Werkstück auf einer gebogenen Bahn.

Aus der Praxis sind andere Pressentransfersysteme bekannt, die im Freiraum zwischen benachbarten Pressen einen oberhalb der Werkstücktransportebene angeordneten Umsetzer aufweisen. Dieser besteht aus einem linear und quer zur Pressenstraße beweglichen Förderwagen mit einer Hubsäule, an deren Ende ein linear beidseits ausfahrbarer dreiteiliger Teleskopschlitten angeordnet ist, der am letzten Teleskopschlitten einen verfahrbaren Transportwagen mit einer Schwenkeinrichtung für einen Werkzeugträger eines Greifwerkzeugs aufweist. Mit der Hubsäule am Förderwagen kann der Teleskopschlitten gehoben und gesenkt werden. Die Kinematik dieses Pressentransfersystems ist beschränkt und bedingt die aufwändige Teleskopschlittenanordnung. Sie ist einerseits zur Erzielung einer großen Auslegelänge für den Eingriff in die beidseitigen Pressen und andererseits zur Bildung einer kleinen Teleskopschlittenbreite in der zusammengefahrenen Mittelstellung für die störungsfreie Unterbringung im Freiraum zwischen den Pressen erforderlich.

Es ist daher Aufgabe der vorliegenden Erfindung, eine verbesserte Transporttechnik für Werkstücke aufzuzeigen.

Die Erfindung löst diese Aufgabe mit den Merkmalen im Hauptanspruch.
Die beanspruchte Transporttechnik hat den Vorteil einer hohen Beweglichkeit und Flexibilität. Die Transporteinrichtung kann z.B. acht oder mehr Achsen haben, die einzeln ansteuerbar sein können. Hierdurch kann eine sehr flexible Kinematik und eine Anpassung an unterschiedliche Bearbeitungsvorrichtungen und deren Aufstellbedingungen, insbesondere an Pressen in einer Pressenstraße, erreicht werden. Die Transporteinrichtung lässt sich für die unterschiedlichsten Bearbeitungsvorrichtungen einsetzen. Sie kann auch an variierende Abstände zwischen benachbarten Bearbeitungsvorrichtungen auf einfache Weise angepasst werden. Hierfür genügt in den meisten Fällen eine Umprogrammierung des Roboters.

Die hochflexible Transporteinrichtung kann die Werkstücke heben und senken und kann sie auch auf einer beliebigen und insbesondere weitgehend geraden Bahn zwischen den Bearbeitungsvorrichtungen transportieren. Diese schnelle und leistungsfähige Kinematik ist günstig zur Erzielung einer hohen Transportgeschwindigkeit und eines entsprechend schnellen Bearbeitungstaktes, insbesondere Pressentaktes. Die Transporteinrichtung kann ansonsten die Werkstücke bei Bedarf auch umorientieren sowie ggf. auf einer gekrümmten Bahn transportieren.

Die beanspruchte Transporteinrichtung hat ferner Vorteile hinsichtlich der Baugröße. Die Transfereinrichtung kann eine geringe Bauhöhe haben, was vor allem an den Endbereichen günstig ist, die in die Bearbeitungsvorrichtung, insbesondere in eine Presse, eingreifen. Die erforderliche Öffnungsweite der Bearbeitungsvorrichtung kann für diesen Eingriff klein gehalten werden, was ebenfalls zu einer Beschleunigung der Maschinenfunktion und des Arbeitstaktes beitragen kann.

Durch die mehrfache Drehbeweglichkeit über Roboterachsen und die Schwenkeinrichtung kann das Werkstück in verschiedener Weise gedreht und geschwenkt werden. Dies ist günstig, um auch kompliziert geformte Werkstücke mit abstehenden Werkstückbereichen schnell und sicher handhaben zu können. Insbesondere können derartige Werkstücke beim Herausnehmen und Einführen in eine Blechpresse über Kanten innerhalb der Presse geschwenkt und dadurch mit deutlich reduziertem Öffnungsweitenbedarf bewegt werden.

Die Vorschub- und die Schwenkeinrichtung können als Zusatzachsen in eine Robotersteuerung einbezogen und direkt angesteuert werden. Dies ist für eine schnelle und zielsichere Bewegung des Greifwerkzeugs und des gehaltenen Werkstücks günstig.

Außerdem bietet die Transporteinrichtung eine hohe Positioniergenauigkeit um mehrere unterschiedliche Achsen. Das Werkstück kann dadurch während des Transports und bei den Handhabungsvorgängen beim Herausnehmen und Einlegen aus- bzw. in eine Bearbeitungsvorrichtung in der vorgegebenen Position gehalten und arretiert werden. Bei der Schwenkeinrichtung kann eine Übersetzung hilfreich sein, um die Reaktionsmomente des Werkstücks besser abstützen und halten zu können, wobei der Schwenkantrieb entlastet werden kann.

Die Schwenkachse für die Werkstückbewegung kann bedarfsweise an die gewünschte Stelle im Bereich der Transfereinrichtung oder auch distanziert hiervon im Bereich des Werkstücks gelegt werden. Eine Schwenkachsenlage an der Transfereinrichtung und an einem zugeordneten Schlitten ist günstig für eine Verringerung der Bauhöhe. Die wegen der Nähe des Tragbalkens u.U. eingeschränkte Schwenkbeweglichkeit kann durch die rotatorischen Achsen des Roboters kompensiert werden.

Insgesamt bietet die beanspruchte Transporteinrichtung eine hohe Effizienz und Wirtschaftlichkeit in Verbindung mit einer optimierten Kinematik.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Schemadarstellung einer Transporteinrichtung für Blechteile im Freiraum zwischen zwei benachbarten Pressen,
- Figur 2:: eine erste Variante einer Transporteinrichtung in Seitenansicht,
- Figur 3:: eine zweite Variante der Transporteinrichtung in Seitenansicht,
- Figur 4 und 5:: eine dritte Variante der Transporteinrichtung in verschiedenen perspektivischen Ansichten,
- Figur 6:: eine Draufsicht auf eine Transfereinrichtung der dritten Variante,
- Figur 7 bis 9:: weitere geklappte Ansichten der Transfereinrichtung von Figur 6,
- Figur 10:: eine schematische Darstellung einer Energiekette in der Transfereinrichtung von Figur 6,
- Figur 11 und 12:: verschiedene Bewegungsstellungen der Transfereinrichtung,
- Figur 13:: eine Schemadarstellung einer Variante eines Schwenkantriebs,
- Figur 14:: eine perspektivische Darstellung eines Getriebes des Schwenkantriebs von Figur 13 und
- Figur 15:: eine Draufsicht des Getriebes des Schwenkantriebs von Figur 13.

Die Erfindung betrifft eine Transporteinrichtung (1) für Werkstücke (2) und deren Transport zu einer oder mehreren benachbarten Bearbeitungsvorrichtungen (3,4). Insbesondere betrifft die Transporteinrichtung (1) ein Pressentransfersystem für Blechteile (2) zwischen benachbarten Pressen (3,4), die gegebenenfalls Bestandteil einer Pressenstraße sein können. Die Erfindung betrifft außerdem ein Transportverfahren.

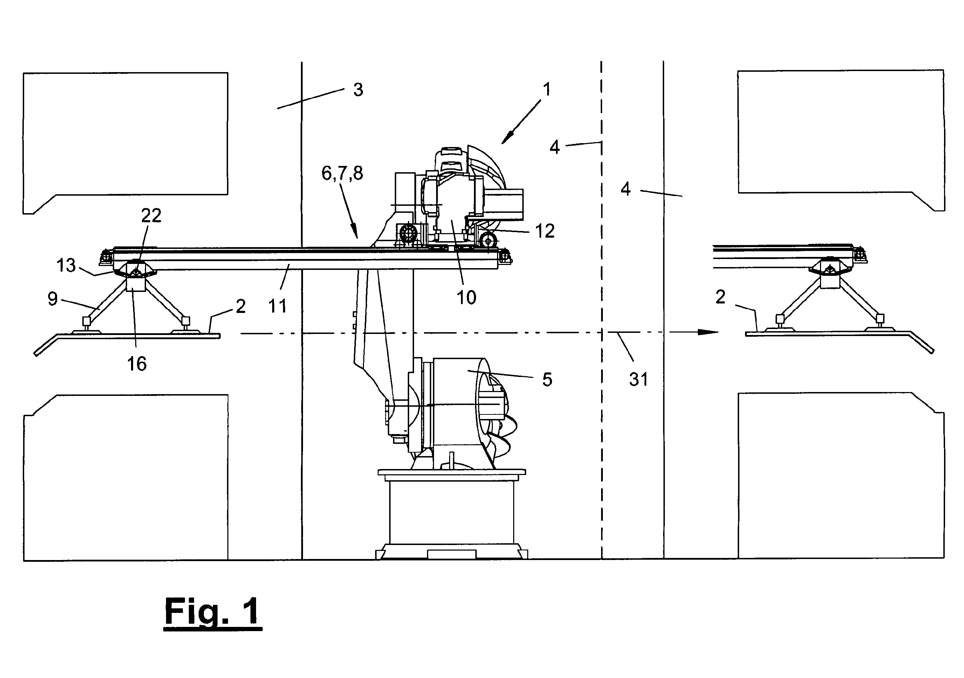

Figur 1 zeigt schematisch eine Transporteinrichtung (1), die im Freiraum zwischen zwei benachbarten Bearbeitungsvorrichtungen (3,4), hier in Form von Blechpressen, angeordnet ist und die Werkstücke (2), hier z.B. gebogene Blechteile, entlang einer im wesentlichen geraden Verbindungslinie (31) zwischen den Pressen (3,4) transportiert. In Abwandlung der gezeigten Ausführungsform können die Bearbeitungsvorrichtungen (3,4) auch von anderer Art und Bauweise sowie von anderer Anordnung sein. In der gezeigten Ausführungsform werden die Werkstücke (2) auf direktem Wege und ohne Zwischenablage von der einen Bearbeitungsvorrichtung (3) zur anderen Bearbeitungsvorrichtung (4) transportiert.

In Abwandlung der gezeigten Ausführungsform kann die Transportvorrichtung (1) auch zwischen einer Bearbeitungsvorrichtung und einem Lager oder Magazin oder dgl. anderer Ablage für die Werkstücke (2) angeordnet sein, wobei sie die Werkstücke (2) zuführt oder abführt.

Für den Werkstücktransport ist eine Transporteinrichtung (1) vorgesehen, die mindestens einen mehrachsigen Roboter (5) mit einer Transfereinrichtung (6) und einem Greifwerkzeug (9) aufweist. Der Roboter (5) führt die steuerbare Transfereinrichtung (6), welche eine Vorschubeinrichtung (7) und eine Schwenkeinrichtung (8) für das Greifwerkzeug (9) aufweist.

Der mehrachsige Roboter (5) kann in beliebig geeigneter Weise ausgebildet sein und kann drei oder mehr rotatorische und/oder translatorische Achsen in beliebiger Achsenkombination und Achsenzahl aufweisen. Im gezeigten und bevorzugten Ausführungsbeispiel ist der Roboter (5) als Gelenkarmroboter ausgebildet, der z.B. sechs rotatorische Grundachsen aufweist. Er kann außerdem eine oder mehrere weitere Bewegungsachsen, insbesondere eine lineare Fahrachse oder eine Schwenkachse auf einer Schwinge oder dgl. besitzen.

Der Roboter (5) weist außerdem eine mehrachsige Roboterhand (10) auf. Diese kann zwei oder drei Handachsen aufweisen, die Bestandteil der vorerwähnten Grundachsen des Roboters (5) sind. Die z.B. zwei oder drei Handachsen können orthogonale Schwenkachsen sein und ggf. einen gemeinsamen Schnittpunkt haben. Die Roboterhand (10) kann an der Abtriebsseite ein bewegliches Abtriebselement, z.B. einen Drehflansch (nicht dargestellt), aufweisen, der mit der Transfereinrichtung (6) auf direktem Wege fest oder lösbar verbunden werden kann. Hierbei kann außerdem eine fernsteuerbare Wechselkupplung zwischengeschaltet sein, die einen automatischen Wechsel der Transfereinrichtung (6) ermöglicht. Der Roboter (5) kann hierfür z.B. eine nach rückwärts gerichtete Überkopfbewegung zu einer Wechselstelle bzw. einem Magazin für Transfereinrichtungen (6) ausführen. Die Transfereinrichtung (6) kann alternativ am Roboter (5) verbleiben, wobei das Greifwerkzeug (9) im Zusammenwirken mit einem Werkzeugmagazin an der Roboterrückseite gewechselt werden kann. Der Roboter (5) besitzt außerdem eine Robotersteuerung (nicht dargestellt).

Die Vorschubeinrichtung (7) und die Schwenkeinrichtung (8) der Transfereinrichtung (6) sind mit der Robotersteuerung verbunden. Sie können als Zusatzachsen des Roboters (5) ausgebildet sein und von der Robotersteuerung direkt angesteuert werden. In der gezeigten Konfiguration kann die Transporteinrichtung (1) acht oder mehr einzeln und unabhängig voneinander ansteuerbare Bewegungsachsen aufweisen.

Die Transfereinrichtung (6) kann eine Auslegerfunktion haben und dazu dienen, das Greifwerkzeug (9) in die geöffneten Pressen (3,4) und in den Bereich zwischen die in Figur 1 schematisch dargestellten Ober- und Unterwerkzeuge der Pressen (3,4) einzuführen. Die Roboterhand (10) und die anderen Roboterteile können dabei außerhalb der Pressen (3,4) bleiben. Die Auslegerlänge der Transfereinrichtung (6) kann auf diese Eingriffsfunktion abgestimmt und entsprechend in der Länge optimiert sein. Die Transfereinrichtung (6) kann bei Bedarf auch länger sein.

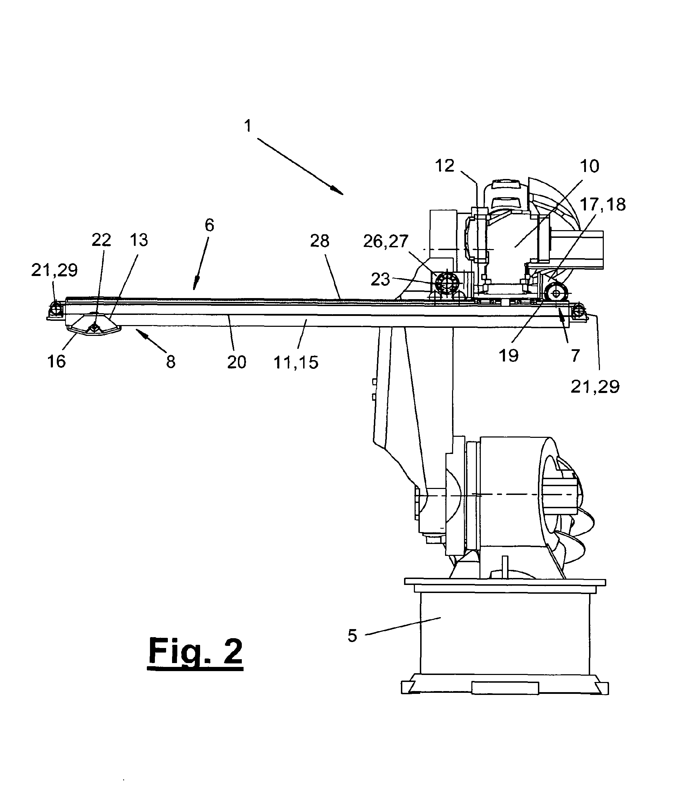

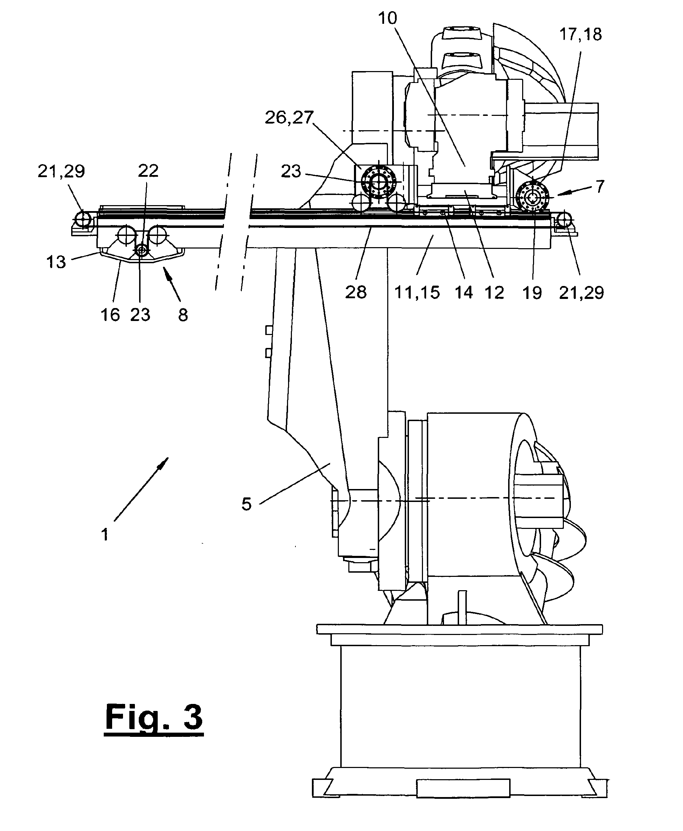

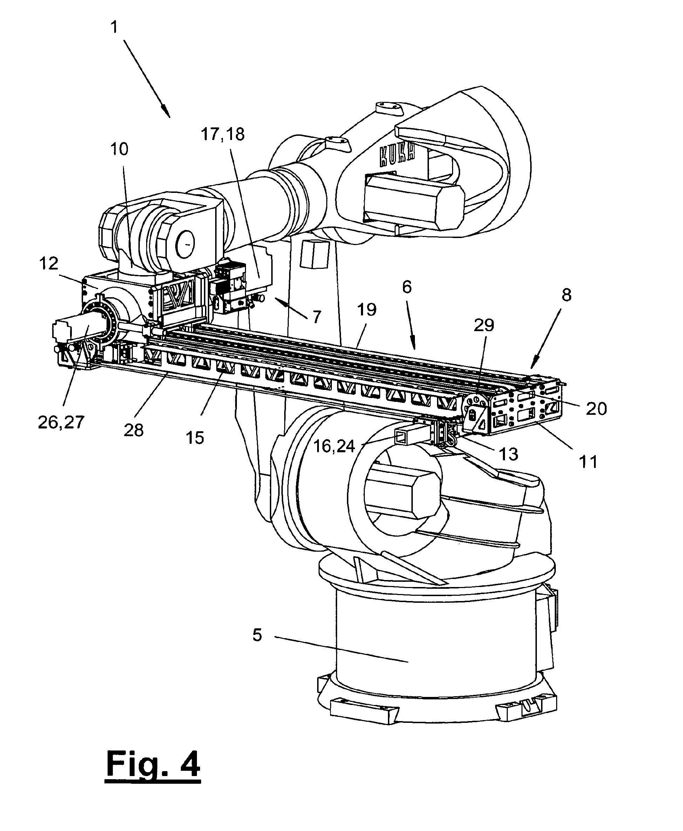

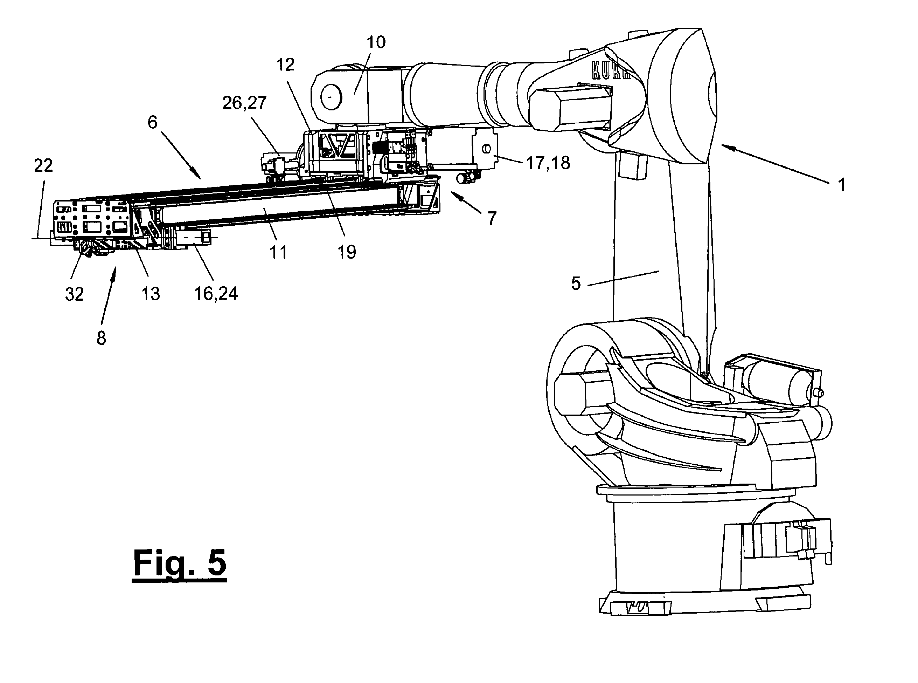

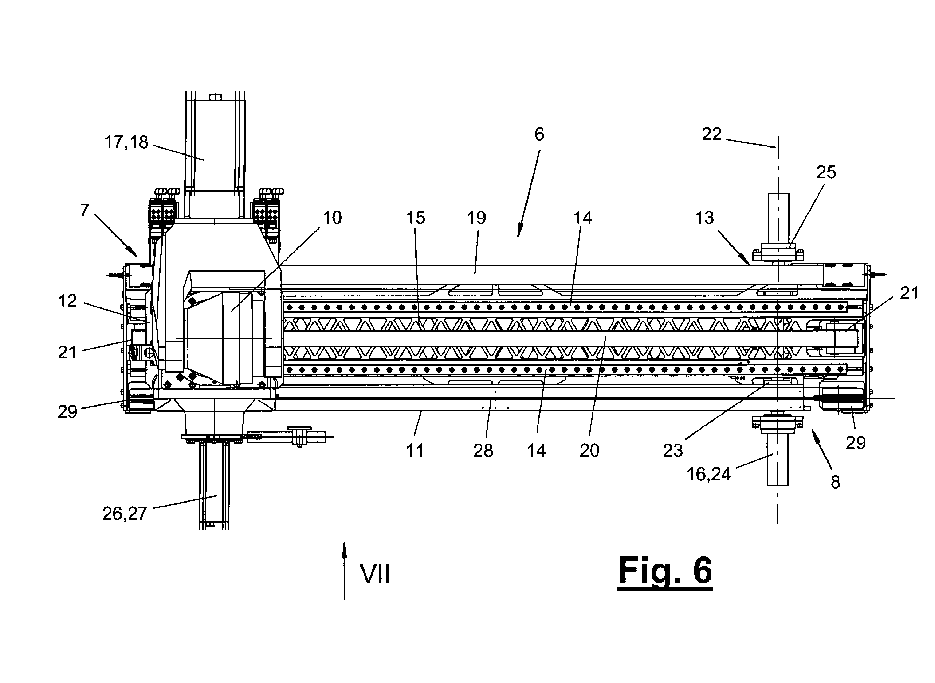

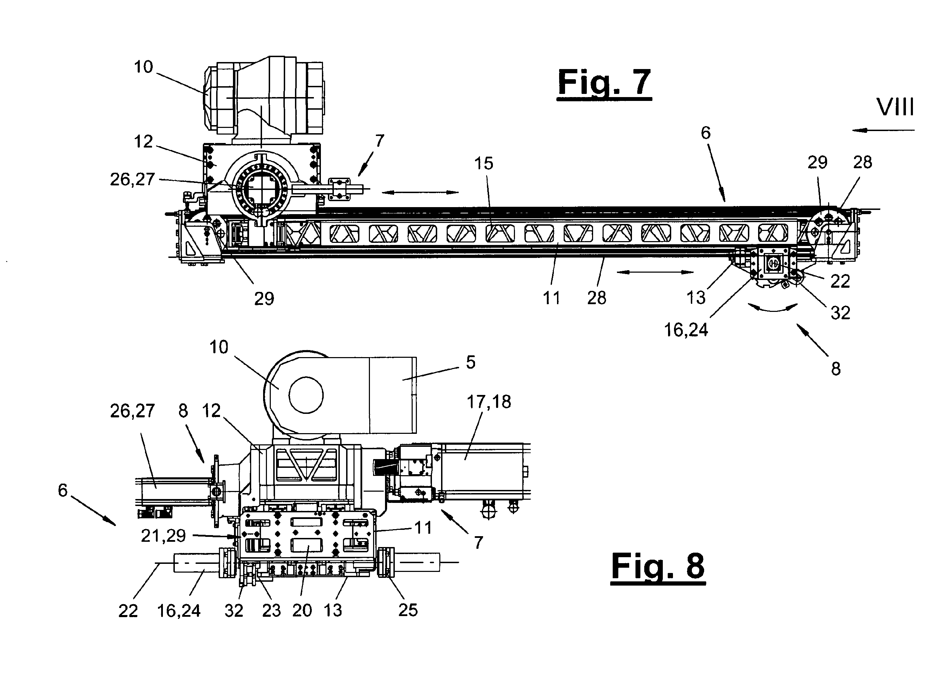

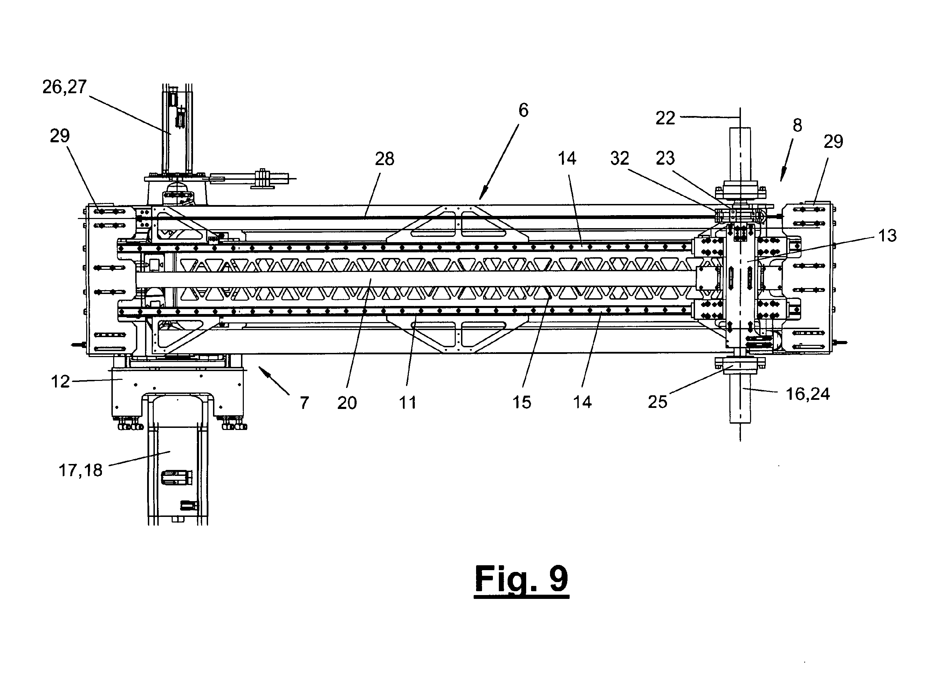

Die Transfereinrichtung (6) ist in Figur 2 und 3 in einer ersten und zweiten Variante dargestellt. Figur 4 bis 10 zeigen eine dritte Variante der Transfereinrichtung (6). Sie ist im Detail in Figur 6 in Draufsicht zu sehen, wobei Figur 7 und 8 die zugehörige Seiten- und Stirnansicht gemäß Pfeilen VII und VII darstellen. Figur 9 gibt eine Unteransicht wieder.

Die Transfereinrichtung (6) weist in den verschiedenen Varianten jeweils einen Werkstückträger (16) für das Greifwerkzeug (9) auf, der von der Vorschub- und Schwenkeinrichtung (7,8) relativ zur Roboterhand (10) translatorisch und rotatorisch bewegt werden kann. Figur 7 zeigt die Bewegungsmöglichkeiten mit Pfeilen. Das Greifwerkzeug (9) kann in beliebig geeigneter Weise ausgebildet sein. Im gezeigten Ausführungsbeispiel von Figur 1 handelt es sich um eine Greiferspinne mit einem Traggerüst und mit mehreren Greifelementen, die z.B. als Saugköpfe, Magnetköpfe oder dergleichen ausgebildet sind und die das Werkstück (2) an vorgegebenen Stellen gemeinsam fassen.

Das Greifwerkzeug (9) kann einteilig oder mehrteilig sein. Es kann mit dem Werkstückträger (16) über einen z.B. zapfen- oder rohrartigen Werkzeuganschluss (24) und eine ggf. dort angeordnete Kupplung (25) verbunden werden. Die Kupplung (25) kann manuell bedienbar sein. Sie kann auch einen Antrieb haben und fernsteuerbar sein, so dass ein automatischer Werkzeugwechsel der vorbeschriebenen Art möglich ist.

Die Transfereinrichtung (6) kann in den verschiedenen Varianten jeweils vom Roboter (5) zwischen den Bearbeitungsvorrichtungen (3,4) hin- und herbewegt werden. Die Transfereinrichtung (6) kann sich auch ihrerseits relativ zum Roboter (5) und insbesondere zu seiner Roboterhand (10) bewegen. Bei einem geringen Abstand der Bearbeitungsvorrichtungen (3,4) und bei einer ausreichend großen Länge der Transfereinrichtung (6) kann der Roboter (5) gegebenenfalls in Ruhe bleiben oder sich auf Hebebewegungen und gegebenenfalls ergänzende Schwenkbewegungen beschränken, wobei die hauptsächliche Transportbewegung entlang der Verbindungslinie (31) von der Transfereinrichtung (6) geleistet wird.

Figur 1 verdeutlicht eine solche Konfiguration mit der in der rechten Bildhälfte gestrichelt angedeuteten Pressenkontur. Wenn der Abstand zwischen den Bearbeitungsvorrichtungen (3,4) größer ist, kann der Roboter (5) eine zusätzliche Transportbewegung, beispielsweise eine im wesentlichen horizontal ablaufende Schwenkbewegung, ausführen, um die Transfereinrichtung (6) zusätzlich entlang der Verbindungslinie (31) zu bewegen und zu transportieren. Figur 1 verdeutlicht in der rechten Bildhälfte mit den durchgezogenen Strichen einen größeren Pressenabstand.

Die Transfereinrichtung (6) weist einen mit der Roboterhand (10) verbundenen Tragbalken (11) auf. An dem Tragbalken (11) kann das Greifwerkzeug (9) bzw. der Werkzeugträger (16) linear oder in anderer Weise entlang bewegt werden und auch relativ zum Tragbalken (11) geschwenkt werden. Wie Figur 1 und 7 verdeutlichen, wird der Tragbalken (11) im Betrieb vorzugsweise derart vom Roboter (5) gehalten, dass die Vorschubbewegung längs der Verbindungslinie (31) im wesentlichen horizontal gerichtet ist. Die Schwenkachse (22) der Schwenkbewegung des Werkzeugträgers (16) ist quer zur Vorschubbewegung beziehungsweise quer zur Längsachse der Transfereinrichtung (6) ausgerichtet und verläuft parallel zu der benachbarten Hauptebene oder Werkzeug-Führungsebene des Tragbalkens (11), insbesondere parallel zu dessen Unterseite.

Die Schwenkachse (22) kann insbesondere im Betrieb der Transporteinrichtung (1) eine im wesentlichen horizontale Lage haben. Die im wesentlichen horizontale Lage bedeutet in beiden Fällen, dass eine überwiegende Richtungskomponente in der Horizontalen besteht, wobei die Vorschubbewegung und die Schwenkachse (22) exakt horizontal oder entsprechend schräg ausgerichtet sein kann.

Der Tragbalken (11) ist seinerseits relativ zur Roboterhand (10) beweglich, wobei er sich insbesondere entlang der Verbindungslinie (31) bewegen kann. Er kann als beidseitiger Ausleger ein Mal nach links und ein Mal nach rechts von der Roboterhand (10) wegragen.

Der Tragbalken (11) besitzt eine hohe Biegesteifigkeit und kann aus Gewichtsgründen als Hohlkörper ausgeführt sein. Er besitzt eine entsprechend steife Tragstruktur (15), die z.B. als Fachwerk ausgebildet ist. Die Tragstruktur (15) kann alternativ als kastenförmiges Gehäuse mit Durchbrechungen zur Gewichtsersparnis ausgeführt sein. Der Tragbalken (11) hat eine im Querschnitt im wesentlichen rechteckige Kastenform und kann eine gerade Längserstreckung haben. Die Vorschubbewegungen sind dabei linear und geradlinig. Sie können alternativ gekrümmt sein, wobei der Tragbalken (11) eine entsprechende andere Formgebung hat.

Die Vorschubeinrichtung (7) weist einen Schlitten (12) auf, der mit der Roboterhand (10) verbunden werden kann und hierfür eine entsprechende Kupplungsstelle zur Verbindung mit dem Abtriebsflansch der Roboterhand (10) oder mit einer Wechselkupplung aufweist. Der Schlitten (12) kann alternativ auch mit dem letzten Gehäuseabschnitt der Roboterhand (10) verbunden werden. Die Vorschubeinrichtung (7) besitzt ferner mindestens einen zweiten Schlitten (13), der z.B. für den Werkzeugträger (16) vorgesehen ist. Beide Schlitten (12,13) sind am Tragbalken (11) linear beweglich angeordnet und können über geeignete Führungen (14), z.B. zweigleisige Schienenführungen in Verbindung mit Rollkäfigen oder Gleitschuhen an den Schlitten (12,13), mit großer Stützbasis kippfest und linear in Vorschubrichtung beweglich bzw. verschieblich oder verfahrbar geführt sein. Die Führung (14) für den Schlitten (13) bildet die vorerwähnte Werkzeug-Führungsebene.

Die Schlitten (12,13) können an verschiedenen Seiten des Tragbalkens (11) angeordnet sein. In den gezeigten Ausführungsbeispielen befindet sich der Schlitten (12) für die Roboterhand (10) an der Balkenoberseite und der Schlitten (13) für den Werkzeugträger (16) an der Schlittenunterseite. Abwandlungen dieser Zuordnung sind möglich, indem z.B. die Schlitten (12,13) und ihre Führungen (14) über Eck oder einander gegenüber liegend an den seitlichen Tragbalkenrändern angeordnet sind.

Die Schwenkachse (22) für den Werkzeugträger (16) und das Greifwerkzeug (9) kann in den dargestellten Ausführungsformen im Bereich des Tragbalkens (11) bzw. im Bereich des Schlittens (13) liegen. Sie kann alternativ bei entsprechender Gestaltung der Schwenkeinrichtung (8) vom Tragbalken (11) distanziert sein und z.B. im Bereich des Werkstücks (2) liegen.

Die Vorschubeinrichtung (7) und die Schwenkeinrichtung (8) besitzen steuerbare Antriebe (17,26). Diese können in beliebig geeigneter Weise ausgebildet sein. Ein Vorschubantrieb (17) kann z.B. von einer Zylinderanordnung, einem Linearmotor oder dgl. gebildet werden. Ein Schwenkantrieb (26) kann beispielsweise von einem auf der Drehachse des Werkzeugträgers (16) aufgesteckten Motor gebildet werden.

In den gezeigten Ausführungsbeispielen sind der Vorschubantrieb (17) und der Schwenkantrieb (26) an der Roboterhand (10) oder am zugeordneten Schlitten (12) angeordnet. Dies ist günstig für die Massenverteilung und für die Betriebsmittelversorgung. Die Antriebe (17,26) können dadurch relativ ortsfest gegenüber dem Tragbalken (11) und dem anderen Schlitten (13) angeordnet sein.

Die Vorschubeinrichtung (7) dient zur Bewegung der Schlitten (12,13) und ggf. des Tragbalkens (11). Dies sind z.B. gegenseitige Relativbewegungen der Schlitten (12,13) und Relativbewegungen des Tragbalkens (11) gegenüber dem Roboter (5) bzw. seiner Roboterhand (10) und dem dort angeschlossenen Schlitten (12).

Die Schlitten (12,13) können unabhängig voneinander bewegbar und antreibbar sein. Die Schlitten (12,13) können aber auch durch eine umlaufende Koppeleinrichtung (20) miteinander verbunden sein, so dass sie voneinander abhängige Bewegungen ausführen.

Die Koppeleinrichtung (20) wird z.B. von einem flexiblen Verbindungselement, beispielsweise einem Riemen oder einem Seil gebildet, das mit beiden Schlitten (12,13) verbunden ist und diese bei seiner Bewegung mitnimmt. Die z.B. mittig am Tragbalken (11) angeordnete Koppeleinrichtung (20) ist in einer geschlossenen Schlaufe über Umlenkungen (21) an beiden Stirnenden des Tragbalkens (11) geführt. Der Vorschubantrieb (17) wirkt auf den Tragbalken (11) ein und bewegt diesen linear gegenüber dem am Roboter (5) gehaltenen Schlitten (12). Diese Relativbewegung wird über die Koppeleinrichtung (20) auf den anderen Schlitten (13) übertragen, der sich dadurch in der gleichen Richtung wie der Tragbalken (11) bewegt und dabei die doppelte Absolutgeschwindigkeit des Tragbalkens (11) hat. Die gekoppelten Schlitten (12,13) bewegen sich am Tragbalken (11) in entgegen gesetzten Richtungen.

Der Vorschubantrieb (17) weist in der gezeigten Ausführungsform einen Motor (18) und ein auf den Tragbalken (11) wirkendes Übertragungsmittel (19) auf. Der Motor (18) kann ein steuerbarer Elektromotor, insbesondere ein elektrischer Servomotor sein, der mit der Robotersteuerung verbunden ist und der exakte und schnelle Positionierbewegungen ermöglicht. Der Motor (18) kann ein nachgeschaltetes Untersetzungsgetriebe aufweisen.

Das Übertragungsmittel (19) ist in der ersten Ausführungsform von Figur 2 als Zahnstangentrieb ausgebildet, wobei der Motor (18) direkt oder über ein vorgeschaltetes Getriebe ein Ritzel antreibt, das mit einer längs des Tragbalkens (11) ausgerichteten und an dessen Oberseite angeordneten Zahnstange kämmt. Auch die zweite Variante von Figur 3 kann einen solchen Zahnstangentrieb oder einen anderen Trieb aufweisen, der die Motorrotation in eine Translationsbewegung des Tragbalkens (11) umsetzt.

In der der dritten Ausführungsform von Figur 4 bis 10 ist das Übertragungsmittel (19) als Riementrieb ausgebildet, wobei ein dem Motor (18) zugeordnetes Ritzel mit einem endlichen und mit beiden Enden an den Stirnbereichen des Tragbalkens (11) fixierten Zahnriemen in einer Omega-Umschlingung kämmt. Der Riementrieb (19) ist z.B. an der Oberseite und an einem Längsrand des Tragbalkens (11) angeordnet.

Für den Schwenkantrieb (26) gibt es ebenfalls verschiedene Ausführungsformen. Er dient zur Beeinflussung der Dreh- oder Schwenkstellung des Werkzeugträgers (16) an seinem Schlitten (13), wobei dies in allen Schlittenpositionen gleichermaßen möglich ist.

Der Schwenkantrieb (26) kann ebenfalls einen steuerbaren Motor (27) aufweisen. Dies kann wie beim Vorschubantrieb (17) ein Elektromotor, insbesondere ein elektrischer Servomotor sein, der ebenfalls mit der Robotersteuerung verbunden ist und eine schnelle und exakte Werkstückdrehung und auch ein Positionieren und Halten der Drehstellung ermöglicht. Die Haltekräfte können beim Vorschub- und beim Schwenkantrieb (17,26) von den Motoren (18,27) aufgebracht werden. Bei einer anderen Motoranordnung können ggf. Bremsen zur Unterstützung zugeordnet sein.

Der Schwenkantrieb (26) ist mit dem Werkzeugträger (16) durch ein Übertragungsmittel (28) verbunden. Dies kann ein flexibles Übertragungsmittel, z.B. ein Seil oder ein glatter oder gezahnter Riemen oder dgl. sein, welches umlaufend am Tragbalken (11) angeordnet ist. Es kann in einer Schlaufe über stirnseitige Umlenkungen (29) an beiden Stirnenden des Tragbalkens (11) geführt sein. In den Ausführungsbeispielen sind hierzu verschiedene Ausführungsformen dargestellt.

In der Variante von Figur 2 und 3 ist das Übertragungsmittel (28) als Riementrieb, insbesondere als Zahnriementrieb, ausgebildet. Ein Zahnriemen ist in einer endlosen Schlaufe über die stirnseitigen Umlenkungen (29) geführt und läuft in Längsrichtung des Tragbalkens (11) um. Ein als Ritzel ausgebildeter und mit dem Schwenkantrieb (26) verbundener Drehkörper (23) kämmt in einer Omega-Führung oder auf andere Weise mit dem Zahnriemen. Der Zahnriemen ist außerdem am Schlitten (13) über einen weiteren Drehkörper (23) mit einer Schlaufe geführt und treibt diesen an. Die Antriebsdrehung auf den Zahnriemen wird in eine entsprechende Drehung des Werkzeugträgers (16) umgesetzt. Bei dieser Ausführungsform fallen die Drehachse (22) des Werkzeugträgers (16) und die Drehachse des Ritzels oder Drehkörpers (23) zusammen.

Bei der dritten Variante von Figur 4 bis 10 ist das Übertragungsmittel (28) als Seiltrieb ausgebildet. Dieser Seiltrieb (28) benötigt weniger Bauhöhe als der Zahnriementrieb der beiden ersten Ausführungsformen. Ein endloses oder endliches Seil ist auch hier über zwei Drehkörper (23) geführt und ist dabei mit den Drehkörpern (23) an mindestens einer Stelle drehfest für eine Mitnahme verbunden. Das Seil kann dabei den Drehkörper (23) umschlingen und ist am Drehkörpermantel mit einer Klammer oder dgl. festgelegt. Eine Drehbewegung des antriebseitigen Drehkörpers (23) wird hierdurch in eine entsprechende Drehbewegung auf der Abtriebsseite am Schlitten (13) umgesetzt.

Auch bei dieser Ausführungsform kann die Drehachse (22) des Werkzeugträgers (16) mit der Drehachse des Drehkörpers (23) am Schlitten (13) zusammenfallen. Alternativ können die Achsen voneinander distanziert sein, wobei der schlittenseitige Drehkörper (23) über eine Übersetzung (32) auf den Werkzeugträger (16) einwirkt. Die Übersetzung (32) kann z.B. von einer Kurvenscheibe mit einem Kulissenstein gebildet werden, wie sie beispielsweise in Figur 7 und 8 angedeutet sind.

In einer weiteren nicht dargestellten Variante kann die Schwenkeinrichtung (8) eine distanzierte und z.B. im Werkstück (2) befindliche Drehachse (22) aufweisen. In diesem Fall kann z.B. das Übertragungsmittel (28) als Zahnriementrieb ausgebildet sein, der einen ritzelartigen Drehkörper (23) antreibt, welcher wiederum mit einem Zahnbogen kämmt, der um die Drehachse (22) gekrümmt ist, wobei der Werkzeugträger (16) mit diesem Zahnbogen verbunden ist. Der Zahnbogen kann in entsprechenden Führungen am Schlitten (13) drehbeweglich gelagert sein.

Durch die umlaufende Anordnung des Übertragungsmittels (28) ist ein Antriebseingriff des Schwenkantriebs (26) in allen Schlittenstellungen möglich. Eine Vorschubbewegung des Tragbalkens (11) durch den Vorschubantrieb (7) führt zu einer entsprechenden gleichgerichteten Vorschub- oder Fahrbewegung des Schlittens (13), sodass die Trumlängen zwischen den Drehkörpern (23) auf der linken und rechte Seite des Tragbalkens (11) sich ausgleichen und die Vorschubbewegung keinen Einfluss auf den Schwenkantrieb (26) hat.

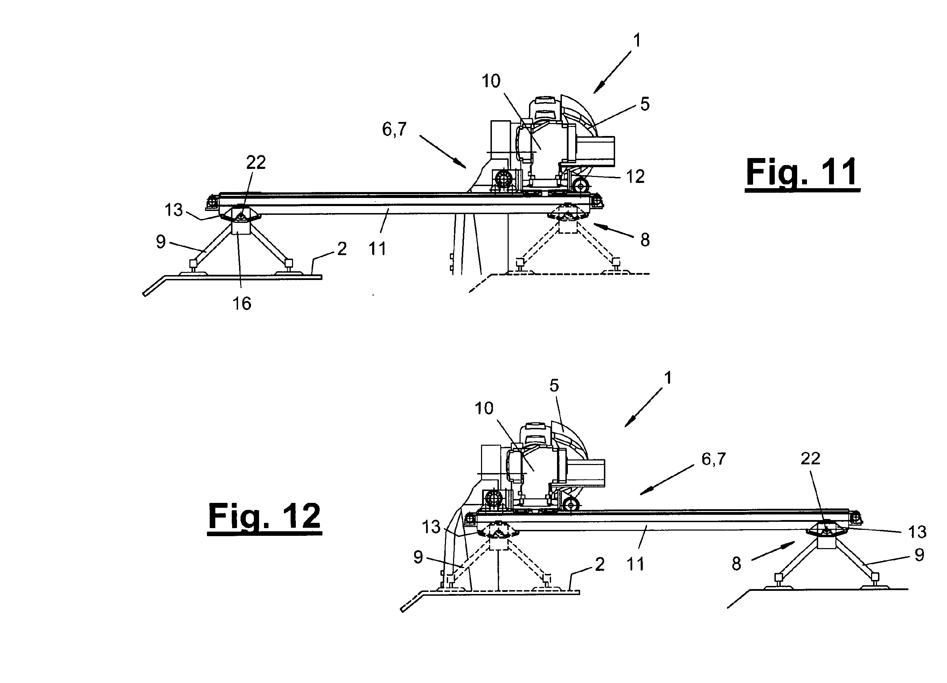

Figur 11 und 12 zeigen verschiedene Bewegungsstellungen der Transfereinrichtung (6). In Figur 11 befindet sich der Schlitten (12) der Vorschubeinrichtung (7) am rechten Ende des Tragbalkens (11), wobei sich der andere Schlitten (13) mit dem Greifwerkzeug (9) am anderen linken Tragbalkenende befindet. Der Schlitten (13) kann sich gekoppelt oder unabhängig vom Schlitten (12) entlang des Tragbalkens (11) bewegen und kann beliebige Stellungen einnehmen, z.B. die gestrichelt dargestellte andere Endstellung am rechten Tragbalkenende. Dazwischen sind beliebige Zwischenstellungen oder Fahrbewegungen möglich. Die Schwenkeinrichtung (8) kann während der Bewegungen der Schlitten (12,13) in Ruhe sein oder betätigt werden.

Figur 12 zeigt eine Bewegung des Tragbalkens (11) und des Schlittens (12) relativ zum Roboter (5). Hierbei ist z.B. der Balken (11) ausgehend von der Ausgangsposition von Figur 11 nach rechts vorgeschoben bzw. gefahren, sodass sich der Schlitten (12) und die Roboterhand (10) am linken Tragbalkenende befinden oder eine beliebige Zwischenstellung einnehmen können. Ein eigenständig angetriebener Schlitten (13) kann bei der Tragbalkenbewegung in Ruhe sein und die in Figur 12 gestrichelt gezeigte Ausgangsstellung gemäß Figur 11 einnehmen. Die Schlittenbewegungen können auch einander überlagert werden, sodass der Schlitten (13) sich während der Tragbalkenbewegung vom einen zum anderen Tragbalkenende bewegt oder beliebige Zwischenstellungen am Tragbalken (11) einnimmt. Der Vergleich von Figur 11 und 12 verdeutlicht die über die flexible Kinematik der Transfereinrichtung (6) erzielbaren Gesamtwege des Greifwerkzeugs (9).

Die Transfereinrichtung (6) kann außerdem von der Roboterhand (10) in beliebiger Weise im Raum bewegt werden. Sie kann insbesondere um die letzte Abtriebsachse oder Handachse des Roboters bzw. der Roboterhand (10) gedreht werden.

Für die Anordnung der Vorschub- und Schwenkantriebe (17,26) am Schlitten (12) gibt es verschiedene Möglichkeiten. In der ersten und zweiten Variante von Figur 2 und 3 sind beide Antriebe (17,26) in Längsrichtung des Tragbalkens (11) gesehen hintereinander und beidseits am Schlitten (12) angeordnet. Ihre Drehachsen sind dabei quer zur Balkenlängsachse und parallel ausgerichtet. Bei der dritten Variante ist die Antriebsanordnung gedreht. Hier sind der Vorschubantrieb (17) und der Schwenkantrieb (26) in Querrichtung des Tragbalkens (11) gesehen einander gegenüberliegend und beidseits am Schlitten (12) angeordnet. Ihre Antriebsachsen sind wiederum quer zur Balkenlängsachse ausgerichtet und sind dabei auch gegeneinander gerichtet. Sie können ggf. auch fluchten. In allen gezeigten Varianten können sich die Antriebe (17,26) und deren Motoren (18,27) in etwa auf gleicher Höhe befinden und sind oberhalb des Tragbalkens (11) angeordnet. Alternativ sind auch andere Anordnungen möglich.

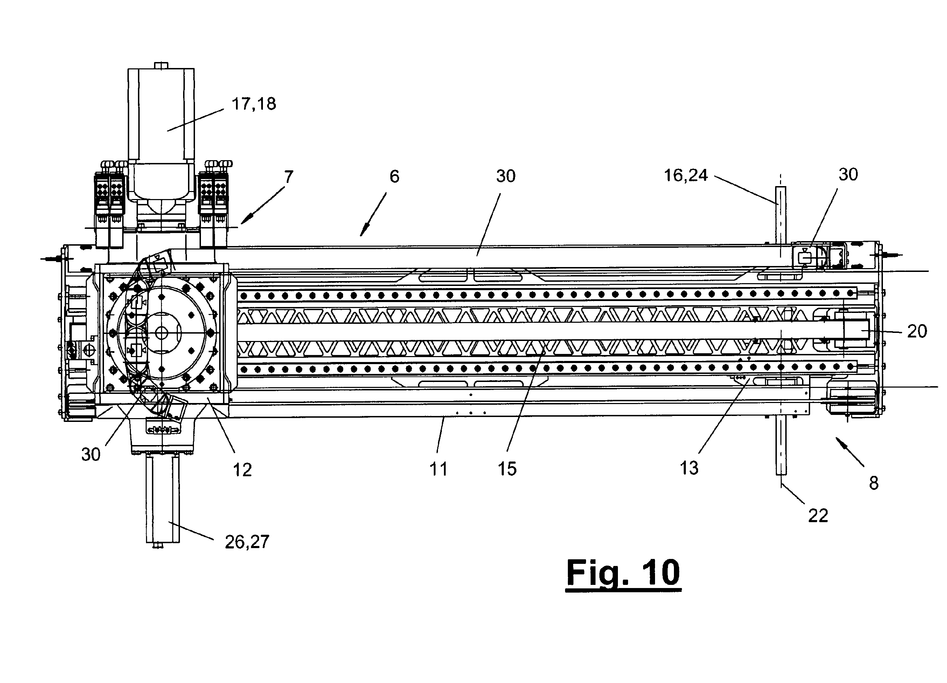

Die Versorgung des Greifwerkzeugs (9) mit Betriebsmitteln, beispielsweise Strom, Unterdruck oder dgl., kann vom Roboter (5) und über die Roboterhand (10) her erfolgen. Hierbei kann z.B. eine in der Draufsicht von Figur 10 dargestellte Energiekette (30) vorhanden sein, die am einen Ende mit einer Einspeisestelle am Schlitten (12) versehen ist und die am anderen Ende mit dem schwenkbaren Werkzeugträger (16) in Verbindung steht und dort ggf. mit einer Medienkupplung verbunden ist. Letzteres kann erforderlich sein, wenn eine Wechselkupplung am Werkzeugträger (16) für einen automatischen Werkzeugtausch angeordnet ist. Die Einspeisestelle am Schlitten (12) kann ebenfalls eine Medienkupplung aufweisen oder mit einer Wechselkupplung verbunden sein. Hier kann ein Medienanschluss mit einer Medienversorgung vom Roboter (5) geschlossen werden.

Wie Figur 10 verdeutlicht, kann die biegsame Energiekette (30) aus mehreren Kettengliedern bestehen, in deren hohlem Innenraum ein oder mehrere biegsame Versorgungsleitungen geführt sind. Die Energiekette (30) kann sich innerhalb des Tragbalkens (11) und dabei an seinen Längsrändern erstrecken. Die Kettenumlenkung über die Tragbalkenbreite ist am Schlitten (12) durchgeführt. Figur 10 zeigt die Endstellung in der Unteransicht des Tragbalkens (11) mit einem am oberen Balkenrand angeordneten geraden Kettenabschnitt, der in einer entsprechenden Aufnahme am Tragbalken (11) untergebracht ist. Wenn der Tragbalken (11) sich gegenüber dem Schlitten (12) nach links bewegt, wird der gerade Kettenabschnitt am oberen Tragbalkenrand abgewickelt und am unteren Tragbalkenrand ein neuer gerader Kettenabschnitt in einer dortigen Aufnahme gebildet. Der vorgenannte obere und untere Balkenrand bezieht sich auf die Bilddarstellung von Figur 10.

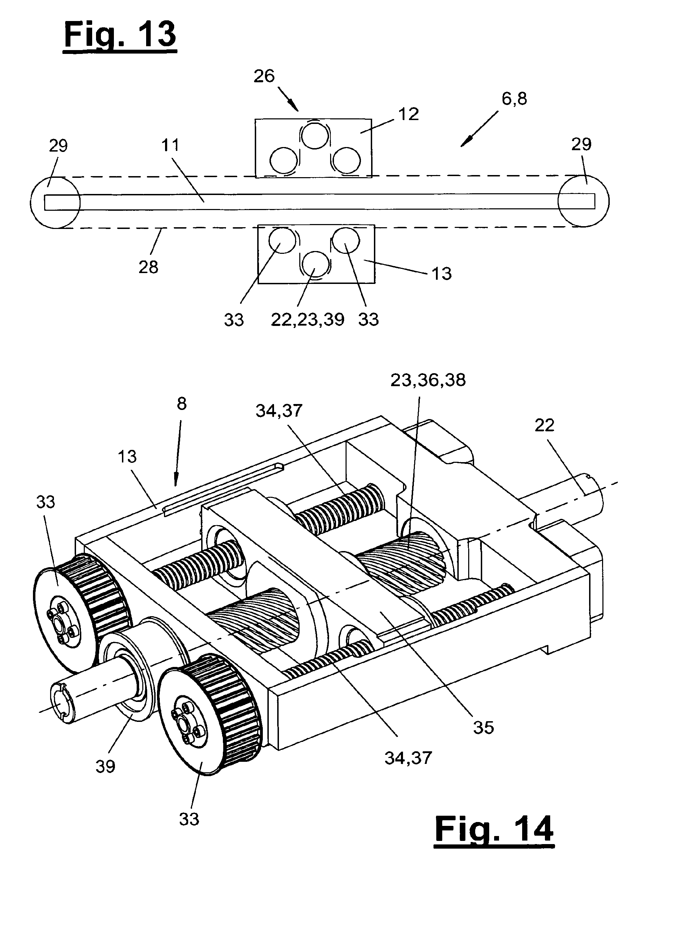

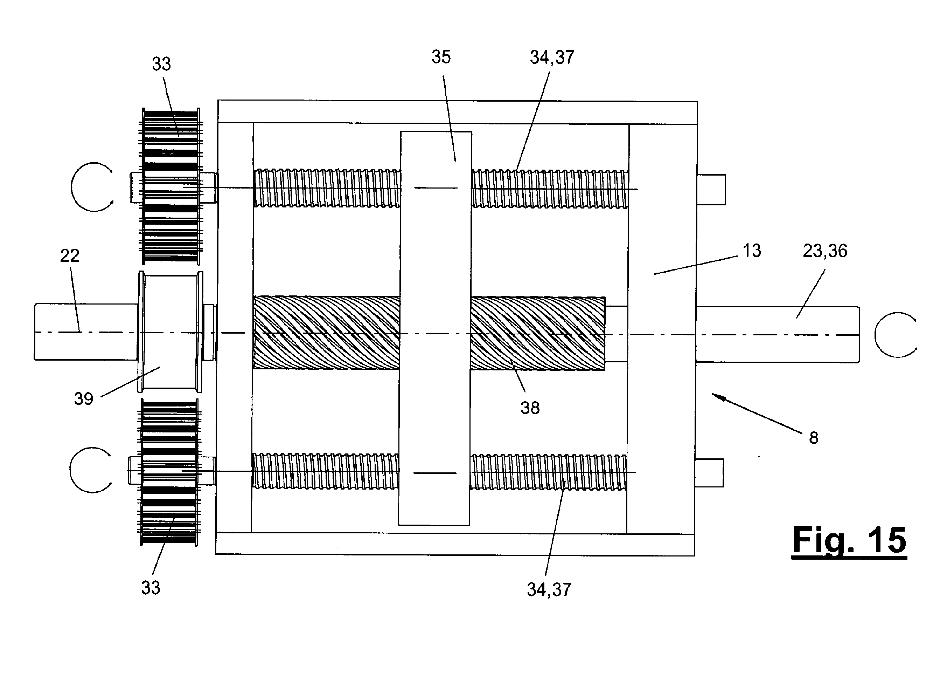

Figur 13 bis 15 zeigen eine Variante der Schwenkeinrichtung (8). Der an geeigneter Stelle, z.B. am Schlitten (12), angeordnete Schwenkantrieb (26) treibt ein Übertragungsmittel (28) umlaufend an, welches z.B. als Zahnriemen ausgebildet ist und in der vorbeschriebenen Weise über endseitige Umlenkungen (29) am Tragbalken (11) geführt ist. Am unteren Schlitten (13) mit der Schwenkachse (22) ist das Übertragungsmittel (28) in einer Omega-Führung mit einer Schlaufe über zwei Antriebsräder (33), insbesondere Ritzel, und eine dazwischen zur Ablenkung angeordnete Umlenkrolle (39) geführt. Das Übertragungsmittel (28), z.B. der Zahnriemen, ist drehschlüssig, z.B. über Zahneingriff kämmend, mit den Antriebsräder bzw. Ritzeln (33) verbunden und treibt bei einer Umlaufbewegung die mit den Antriebsräder bzw. Ritzeln (33) verbundenen Wellen (34) an. Die Wellen (34) sind parallel zur Schwenkachse (22) und zum Drehkörper (23) angeordnet und in geeigneten Drehlagern im Schlitten (13) gelagert. Die Wellen (34) weisen außenseitig ein schraubenförmiges Gewinde (37), insbesondere ein Bewegungsgewinde, auf. Der Drehkörper (23) ist in diesem Ausführungsbeispiel als Welle (36) ausgebildet und ebenfalls mit einer geeigneten Lagerung drehbar im Schlitten (13) gelagert. Die Umlenkrolle (39) ist ihrerseits frei drehbar auf der Welle (36) gelagert. Die Welle (36) trägt außenseitig ein Gewinde (38), insbesondere ein Bewegungsgewinde. Die Wellen (34,36) bilden Spindeln.

Alle drei parallelen Wellen (34,36) mit ihren außenseitigen Gewinden (37,38) kämmen mit einem gemeinsamen querliegenden Joch (35), welches ebenfalls im Gestell des Schlittens (13) angeordnet ist und ggf. im Gestell mit einer Längsführung gleitend geführt ist. Das Joch (35) weist Spindelmuttern, z.B. in Form von Durchgangsbohrungen für die drei Wellen (34,36) mit Innengewinden auf, welche mit den Wellengewinden (37,38) kämmen.

Die Umlaufbewegung des Übertragungsmittels (28) wird in eine Drehbewegung der Ritzel (33) und ihrer Wellen (34) umgesetzt, welche wiederum zu einer Axialbewegung des kämmenden Jochs (35) entsprechend der Wellendrehrichtung führt. Diese Axialbewegung des Jochs (35) wird über den Gewindeeingriff am Gewinde (38) in eine Drehbewegung der Welle (36) des Drehkörpers (23) umgesetzt. Die Spindeln (34) treiben die Spindel (36) drehend an. Die hierbei wirkende Übersetzung ist wählbar. Das Gewinde (38) des Drehkörpers (23) bzw. der Spindel (36) hat z.B. eine größere Steigung als die Gewinde (37) der Spindeln (34).

Die gezeigte Variante der Schwenkeinrichtung (8) hat verschiedene Vorteile. Die Flächenpressung, die bei Zahnrädern nur auf eine sehr geringe Fläche ausgeübt wird, kann durch die Wellen oder Spindeln (34,36) auf eine wesentlich größere Fläche verteilt werden. Hierdurch kann das eingesetzte Material geringer beansprucht und geschont werden. Durch die unterschiedlichen Steigungen der Wellen oder Spindeln (34,36) kann ein sehr hohes Übersetzungsverhältnis gebildet werden. Durch das Übersetzungsverhältnis kann einerseits ein sehr hohes Moment auf die abtreibende Welle oder Spindel (36) ausgeübt werden, wobei andererseits Einflüsse, wie Schwingungen oder dgl., durch eine Selbsthemmung der Wellen oder Spindeln (34,36) bis auf das Spiel der Spindelmuttern im Joch (35) reduziert werden können. Durch ein hohes Übersetzungsverhältnis kann außerdem die Drehbewegung des Schwenkkörpers (23) und des Greifwerkzeugs (9) sehr genau gesteuert werden.

Im gezeigten Ausführungsbeispiel von Figur 13 bis 15 sind wie in den vorbeschriebenen Ausführungsbeispielen die Schlitten (12,13) durch eine Koppeleinrichtung (20) (nicht dargestellt) miteinander gekoppelt. Hierdurch beeinflusst eine Vorschub- oder Fahrbewegung der Schlitten (12,13) und eine Verschiebebewegung des Tragbalkens (11) nicht die Drehstellung des abtreibenden Dreh- oder Schwenkköpers (23) und des Werkzeugträgers (16).

In den gezeigten Ausführungsformen werden die Werkstücke (2) ohne Zwischenablage transportiert. In einer anderen und nicht dargestellten Ausführungsform kann bei Bedarf ein zweiter Roboter im Arbeitsbereich des Roboters (5) angeordnet sein, der ein eigenes Greifwerkzeug und ggf. auch eine Transfereinrichtung (6) aufweist. Bei einer solchen mehrfachen Roboteranordnung ist eine Werkstückübergabe möglich, wobei der zweite Roboter das Werkstück (2) in umgedrehter Lage mit anderen Bearbeitungsvorrichtungen (3,4) einlegen oder zuführen kann. Wird der zweite Roboter nicht benötigt, kann er über eine Fahrachse entfernt oder durch Achsbewegungen derart klein gemacht werden, dass er den Roboter (5) nicht stört.

Abwandlungen der gezeigten und beschriebenen Ausführungsformen sind in verschiedener Weise möglich. Die Merkmale der verschiedenen Ausführungsbeispiele können miteinander vertauscht oder kombiniert werden.

Die Schwenkeinrichtung (8) gemäß Figur 13 bis 15 mit der Umsetzung und gegenseitigen Übertragung von Spindeldrehungen über ein kämmendes und axial bewegtes Joch (35) hat eigenständige erfinderische Bedeutung und kann für beliebige andere Zwecke und für andere Vorrichtungen, z.B. reine Schwenkvorrichtungen, eingesetzt werden. In Abwandlung des gezeigten Ausführungsbeispiels kann die Zahl und Anordnung der Antriebsräder oder Ritzel (33) und ihrer Spindeln (34) variieren. Ein einziges Antriebsrad (33) nebst Spindel (34) kann genügen. Die Zahl kann auch drei oder mehr betragen.

Die Transfereinrichtung (6) kann eine andere Ausbildung haben und kann mehrgliedrig sein, wobei der Tragbalken (11) z.B. als mehrgliedriger Teleskopschlitten ausgeführt sein kann. Bei einem Einsatz eines Roboters (5) ist dies allerdings nicht erforderlich, weil die Länge des Tragbalkens (11) sich nur nach der gewünschten Eintauchtiefe an der Bearbeitungsvorrichtung (3,4) ausrichten und entsprechend kurz ausgeführt sein kann. Die Länge des Tragbalkens (11) kann insbesondere kürzer als der Abstand zwischen den Bearbeitungsvorrichtungen (3,4), insbesondere zwischen deren inneren Endstellungen für die Position des Greifwerkzeugs (9) bzw. Werkzeugträgers (16) sein. Die fehlende Balkenlänge kann durch eine Transportbewegung des Roboters (5) in Richtung der Verbindungslinie (31) ausgeglichen werden.

Ferner können die Komponenten der Transfereinrichtung (6), insbesondere die Ausbildung des Tragbalkens (11), des Vorschubantriebs (7) und des Schwenkantriebs (8) variieren. Die Zahl der Schlitten (12,13) kann größer als zwei sein, wobei die zugehörigen Antriebe entsprechend umgestaltet sind. Die Transfereinrichtung (6) kann außerdem eine eigene Steuerung für ihre Komponenten und insbesondere ihre Antriebe (17,26) aufweisen.

In der eingangs angedeuteten Weise kann die Vorschubeinrichtung (7) für die zwei oder mehr voneinander entkoppelten Schlitten (12,13) eigenständige Antriebe aufweisen. Die Schlitten (12,13) lassen sich dadurch unabhängig voneinander bewegen. Ein Schlitten (13) für das Werkzeug oder Greifwerkzeug (9) kann z.B. einen eigenständigen Fahrantrieb besitzen, der stationär am Tragbalken (11) angeordnet ist oder in Abwandlung am Schlitten (13) angeordnet ist und mitbewegt wird. Bei einer voneinander unabhängigen Schlittenbewegung kann die Schwenkeinrichtung (8) entsprechend angepasst sein. Hierfür kann z.B. an einem Schlitten (13) ein entsprechender Schwenkantrieb angeordnet sein. In weiterer Abwandlung kann der in den Ausführungsbeispielen gezeigte Schwenkantrieb (26) mit dem Übertragungsmittel (28) eingesetzt werden, wobei der Schwenkantrieb (26) Kompensationsbewegungen ausführt, um die Schwenkbewegung des Drehkörpers (23) von einer Fahrbewegung des oder der Schlitten (12,13) zu entkoppeln.

Abwandlungen sind auch hinsichtlich der Ausbildung des Roboters oder sonstigen Manipulators (5) möglich. Die gezeigte Transporteinrichtung (1) kann außerdem zu anderen Transportzwecken als zu dem beschriebenen Blechtransport zwischen Pressen (3,4) eingesetzt werden. Der Transport muss auch nicht zwischen benachbarten Bearbeitungsvorrichtungen (3,4) beliebiger Art stattfinden, sondern kann zwischen Werkstückablagen oder dgl. erfolgen.

### BEZUGSZEICHENLISTE

- 1: Transporteinrichtung
- 2: Werkstück, Blechteil
- 3: Bearbeitungsvorrichtung, Presse
- 4: Bearbeitungsvorrichtung, Presse
- 5: Roboter, Gelenkarmroboter
- 6: Transfereinrichtung
- 7: Vorschubeinrichtung
- 8: Schwenkeinrichtung
- 9: Greifwerkzeug
- 10: Roboterhand
- 11: Tragbalken, Ausleger
- 12: Schlitten oben
- 13: Schlitten unten
- 14: Führung, Schienenführung
- 15: Tragstruktur, Gehäuse
- 16: Werkzeugträger
- 17: Vorschubantrieb, Fahrantrieb
- 18: Motor, Servomotor
- 19: Übertragungsmittel, Riementrieb
- 20: Koppeleinrichtung, Verbindungsriemen
- 21: Umlenkung, Umlenkrolle
- 22: Schwenkachse
- 23: Drehkörper
- 24: Werkzeuganschluss
- 25: Kupplung
- 26: Schwenkantrieb
- 27: Motor, Servomotor
- 28: Übertragungsmittel, Seil
- 29: Umlenkung, Umlenkrolle
- 30: Energiekette
- 31: Verbindungslinie
- 32: Übersetzung
- 33: Antriebsrad, Ritzel
- 34: Welle von Ritzel, Spindel
- 35: Joch
- 36: Welle von Drehkörper, Spindel
- 37: Gewinde von Ritzelwelle
- 38: Gewinde von Drehkörperwelle
- 39: Umlenkrolle

## Patentansprüche

1. Transporteinrichtung für Werkstücke (2), insbesondere Blechteile, zwischen benachbarten Ablagen oder Bearbeitungsvorrichtungen (3,4), insbesondere Pressen, wobei die Transporteinrichtung (1) einen mehrachsigen Roboter (5) mit einem Greifwerkzeug (9) aufweist, wobei die Transporteinrichtung (1) eine vom Roboter (5) geführte, steuerbare Transfereinrichtung (6) mit einer Vorschubeinrichtung (7) und mit einer Schwenkeinrichtung (8) für das Greifwerkzeug (9) aufweist, wobei die Transfereinrichtung (6) einen Werkzeugträger (16) aufweist, der von der Vorschub- und Schwenkeinrichtung (7,8) relativ zur Roboterhand (10) translatorisch und rotatorisch bewegbar ist und wobei die Transfereinrichtung (6) einen mit der Roboterhand (10) verbundenen Tragbalken (11) aufweist, an dem der Werkzeugträger (16) relativ zum Tragbalken (11) verschiebbar, insbesondere linear beweglich, und schwenkbar angeordnet ist, **dadurch gekennzeichnet, dass** der Werkzeugträger (16) eine Schwenkachse (22) aufweist, die quer zu seiner Vorschubrichtung und parallel zur benachbarten Hauptebene oder Werkzeug-Führungsebene des Tragbalkens (11), insbesondere parallel zur Unterseite des Tragbalkens (11), ausgerichtet ist.

2. Transporteinrichtung nach Anspruch 1, **dadurch gekennzeichnet, dass** die Vorschubeinrichtung (7) und die Schwenkeinrichtung (8) mit der Robotersteuerung verbunden und als Zusatzachsen des Roboters (5) ausgebildet oder gesteuert sind.

3. Transporteinrichtung nach Anspruch 1 oder 2, **dadurch gekennzeichnet, dass** der Roboter (5) eine mehrachsige Roboterhand (10) aufweist, an der die Transfereinrichtung (6) angeordnet ist.

4. Transporteinrichtung nach Anspruch 1, 2 oder 3, **dadurch gekennzeichnet, dass** die Vorschubeinrichtung (7) einen Schlitten (12) zur Verbindung mit der Roboterhand (10) und einen Schlitten (13) für den Werkzeugträger (16) aufweist, die am Tragbalken (11) längsbeweglich angeordnet und geführt sind, wobei die Schlitten (12,13) an verschiedenen Seiten des Tragbalkens (11), insbesondere an dessen Ober- und Unterseite, in Schienenführungen (14) verschieblich gelagert sind.

5. Transporteinrichtung nach einem der vorhergehenden Ansprüche, **dadurch gekennzeichnet, dass** der Tragbalken (11) relativ zur Roboterhand (10) beweglich, insbesondere verschiebbar, gehalten ist, wobei der Tragbalken (11) derart vom Roboter (5) gehalten ist, dass die Vorschubbewegung längs der Verbindungslinie (31) zwischen den Bearbeitungsvorrichtungen (3,4) und im wesentlichen horizontal gerichtet ist, wobei die Schwenkachse (22) der Schwenkbewegung quer zur Vorschubbewegung und im wesentlichen horizontal ausgerichtet ist.

6. Transporteinrichtung nach einem der vorhergehenden Ansprüche, **dadurch gekennzeichnet, dass** die Vorschubeinrichtung (7) und die Schwenkeinrichtung (8) steuerbare Antriebe (17,26), bevorzugt mit elektrischen Servomotoren, aufweisen.

7. Transporteinrichtung nach Anspruch 6, **dadurch gekennzeichnet, dass** der Vorschubantrieb (17) und der Schwenkantrieb (26) an der Roboterhand (10) oder am zugeordneten Schlitten (12) angeordnet sind.

8. Transporteinrichtung nach Anspruch 6 oder 7, **dadurch gekennzeichnet, dass** der Vorschubantrieb (17) und der Schwenkantrieb (26) in Querrichtung des Tragbalkens (11) gesehen einander gegenüber liegend und beidseits am Schlitten (12) angeordnet sind.

9. Transporteinrichtung nach Anspruch 6, 7 oder 8, **dadurch gekennzeichnet, dass** der Vorschubantrieb (17) durch ein Übertragungsmittel (19), insbesondere einen Zahnstangen- oder Riementrieb mit dem Tragbalken (11) verbunden ist.

10. Transporteinrichtung nach einem der Ansprüche 4 bis 9, **dadurch gekennzeichnet, dass** die Schwenkachse (22) im Bereich des Tragbalkens (11) oder im Bereich des Schlittens (13) oder distanziert im Bereich des Werkstücks (2) liegt.

11. Transporteinrichtung nach einem der Ansprüche 4 bis 10, **dadurch gekennzeichnet, dass** die Schlitten (12,13) durch eine umlaufende Koppeleinrichtung (20) zur Bewegungsübertragung verbunden sind.

12. Transporteinrichtung nach einem der Ansprüche 4 bis 10, **dadurch gekennzeichnet, dass** der Werkzeugträger (16) am zugeordneten Schlitten (13) um eine Schwenkachse (22) drehbar gelagert und mit dem Schwenkantrieb (26) durch ein umlaufendes Übertragungsmittel (28) verbunden ist.

13. Transporteinrichtung nach Anspruch 10 und 11, **dadurch gekennzeichnet, dass** die umlaufenden Koppel- und Übertragungsmittel (20,28) in einer endlichen oder endlosen Schlaufe über Umlenkungen (21,29) an beiden Enden des Tragbalkens (11) geführt sind.

14. Transporteinrichtung nach einem der vorhergehenden Ansprüche, **dadurch gekennzeichnet, dass** eine Schwenkeinrichtung (8) ein angetriebenes Übertragungsmittel (28) und ein damit drehschlüssig verbundenes Antriebsrad (33) mit einer Spindel (34) aufweist, wobei die Spindel (34) über ein kämmendes axial bewegliches Joch (35) mit Spindelmuttern mit einem spindelartigen Drehkörper (23) verbunden ist und diesen drehend antreibt.

15. Transporteinrichtung nach einem der vorhergehenden Ansprüche, **dadurch gekennzeichnet, dass** der Tragbalken (11) eine Tragstruktur (15) in Fachwerkform oder in Form eines kastenförmigen Gehäuses mit Durchbrechungen zur Gewichtsersparnis aufweist.

## Claims

1. Transport unit for workpieces (2), in particular sheet-metal parts, between neighbouring repositories or machine tools (3, 4), in particular presses, wherein the transport unit (1) has a multi-axial robot (5) with a gripping tool (9), wherein the transport unit (1) has a transfer unit (6), which is guided and controllable by the robot (5), with an indexing unit (7) and with a pivoting unit (8) for the gripping tool (9), wherein the transfer unit (6) has a tool carrier (16) which, by the indexing and pivoting unit (7, 8), is guidable in a translational and rotational manner in relation to the robotic hand (10) and wherein the transfer unit (6) has a support beam (11) which is connected to the robotic hand (10) and on which the tool carrier (16) is disposed in a displaceable, in particular a linearly movable, and pivotable manner in relation to the support beam (11), **characterized in that** the tool carrier (16) has a pivot axis (22) which is oriented transversely to the indexing direction of the former and parallel to the adjacent main plane or tool-guiding plane of the support beam (11), in particular parallel to the lower side of the support beam (11).

2. Transport unit according to Claim 1, **characterized in that** the indexing unit (7) and the pivot unit (8) are connected to the robot controller and are configured or controlled as additional axes of the robot (5).

3. Transport unit according to Claim 1 or 2, **characterized in that** the robot (5) has a multi-axial robotic hand (10) on which the transfer unit (6) is disposed.

4. Transport unit according to Claim 1, 2 or 3, **characterized in that** the indexing unit (7) has a slide (12), for connecting to the robotic hand (10), and a slide (13), for the tool carrier (16), which are disposed and guided in a longitudinally movable manner on the support beam (11), wherein the slides (12, 13) are displaceably mounted in rail guides (14) on different sides of the support beam (11), in particular on the upper and lower sides thereof.

5. Transport unit according to one of the preceding claims, **characterized in that** the support beam (11) is held so as to be movable, in particular displaceable, in relation to the robotic hand (10), wherein the support beam (11) is held by the robot (5) in such a manner that the indexing movement is directed along the connecting line (31) between machine tools (3, 4) and in a substantially horizontal manner, wherein the pivot axis (22) of the pivoting movement is oriented transversely to the indexing movement and in a substantially horizontal manner.

6. Transport unit according to one of the preceding claims, **characterized in that** the indexing device (7) and the pivoting device (8) have controllable drives (17, 26), preferably with electric servomotors.

7. Transport unit according to Claim 6, **characterized in that** the indexing drive (17) and the pivot drive (26) are disposed on the robotic hand (10) or on the assigned slide (12).

8. Transport unit according to Claim 6 or 7, **characterized in that** the indexing drive (17) and the pivot drive (26), when viewed in the transverse direction of the support beam (11), are disposed opposite one another and on both sides on the slide (12).

9. Transport unit according to Claim 6, 7 or 8, **characterized in that** the indexing drive (17) is connected to the support beam (11) by a transmission means (19), in particular a rack drive or a belt drive.

10. Transport unit according to one of Claims 4 to 9, **characterized in that** the pivot axis (22) lies in the region of the support beam (11) or in the region of the slide (13) or, at a distance therefrom, in the region of the workpiece (2).

11. Transport unit according to one of Claims 4 to 10, **characterized in that**, for transmission of motion, the slides (12, 13) are connected by a revolving coupling unit (20).

12. Transport unit according to one of Claims 4 to 10, **characterized in that** the tool carrier (16) is rotatably mounted about a pivot axis (22) on the assigned slide (13) and is connected to the pivot drive (26) by a revolving transmission means (28).

13. Transport unit according to Claims 10 and 11, **characterized in that** the revolving coupling and transmission means (20, 28), via deflections (21, 29), are guided in a finite or infinite loop on both ends of the support beam (11).

14. Transport unit according to one of the preceding claims, **characterized in that** a pivot unit (8) has a driven transmission means (28) and, connected thereto in a rotationally locking manner, a drive wheel (33) with a spindle (34), wherein the spindle (34), via an axially movable meshing yoke (35), is connected with spindle nuts to a spindle-type rotating body (23) and rotationally drives the latter.

15. Transport unit according to one of the preceding claims, **characterized in that** the support beam (11) has a support structure (15) in the form of a lattice or in the form of a box-shaped housing, with openings for saving weight.

## Revendications

1. Dispositif de transport pour pièces usinées (2), notamment pour pièces de tôle, entre des râteliers ou des dispositifs de traitement (3, 4) connexes, notamment de pressage, le dispositif de transport (1) comportant un robot pluriaxial (5) doté d'un outil de préhension (9), le dispositif de transport (1) comportant un dispositif de transfert (6) commandable guidé par un robot (5) doté d'un dispositif d'avancement (7) et d'un dispositif de pivotement (8) pour l'outil de préhension (9), le dispositif de transfert (6) comportant un support d'outil (16) pouvant être déplacé translationnellement et rotativement par le dispositif d'avancement et de pivotement (7, 8) par rapport à la main de robot (10) et le dispositif de transfert (6) comportant un tasseau portant (11) relié à la main de robot (10) au niveau duquel le support d'outil (16) est disposé de façon à pouvoir être déplacé, notamment de façon mobile dans un plan linéaire, et pivoté, par rapport au tasseau portant (11), **caractérisé en ce que** le support d'outil (16) comporte un axe de pivotement (22) orienté transversalement à sa direction d'avancement et parallèlement au plan principal ou plan de guidage d'outil connexe du tasseau portant (11), notamment parallèlement au côté inférieur du tasseau portant (11).

2. Dispositif de transport selon la revendication 1, **caractérisé en ce que** le dispositif d'avancement (7) et le dispositif de pivotement (8) est relié à la commande de robot et est réalisé ou commandé à la façon d'axes supplémentaires du robot (5).

3. Dispositif de transport selon la revendication 1 ou 2, **caractérisé en ce que** le robot (5) comporte une main de robot pluriaxial (10) au niveau de laquelle le dispositif de transfert (6) est disposé.

4. Dispositif de transport selon la revendication 1, 2 ou 3, **caractérisé en ce que** le dispositif d'avancement (7) comporte un coulisseau (12) de liaison avec la main de robot (10) et un coulisseau (13) pour le support d'outil (16), lesdits coulisseaux étant disposés et guidés de façon à être mobiles dans un plan longitudinal au niveau du tasseau portant (11), les coulisseaux (12, 13) étant disposés dans des guides de rail (14) de façon à coulisser au niveau de différents côtés du tasseau portant (11), notamment au niveau de son côté supérieur et inférieur.

5. Dispositif de transport selon l'une quelconque des revendications précédentes, **caractérisé en ce que** le tasseau portant (11) est maintenu de façon mobile, notamment coulissante, par rapport à la main de robot (10), le tasseau portant (11) étant maintenu de telle sorte par le robot (5) que le mouvement d'avancement est orienté longitudinalement par rapport à la ligne de jonction (31) entre les dispositifs de traitement (3, 4), et pour l'essentiel horizontalement, l'axe de pivotement (22) du mouvement de pivotement étant orienté pour l'essentiel de façon horizontale, transversalement au mouvement d'avancement.

6. Dispositif de transport selon l'une quelconque des revendications précédentes, **caractérisé en ce que** le dispositif d'avancement (7) et le dispositif de pivotement (8) comportent des entraînements (17, 26) commandables, de façon préférée dotés de servomoteurs électriques.

7. Dispositif de transport selon la revendication 6, **caractérisé en ce que** l'entraînement d'avancement (17) et l'entraînement de pivotement (26) sont disposés au niveau de la main de robot (10) ou au niveau du coulisseau (12) associé.

8. Dispositif de transport selon la revendication 6 ou 7, **caractérisé en ce que** l'entraînement d'avancement (17) et l'entraînement de pivotement (26) sont disposés, dans la direction transversale du tasseau portant (11), de façon opposée l'un par rapport à l'autre et des deux côtés par rapport au coulisseau (12).

9. Dispositif de transport selon la revendication 6, 7 ou 8, **caractérisé en ce que** l'entraînement d'avancement (17) est relié au tasseau portant (11) par le biais d'un moyen de transmission (19), notamment d'une propulsion à barres dentées ou courroie.

10. Dispositif de transport selon l'une quelconque des revendications 4 à 9, **caractérisé en ce que** l'axe de pivotement (22) se situe dans la zone du tasseau portant (11) ou dans la zone du coulisseau (13) ou à une certaine distance dans la zone de la pièce usinée (2).

11. Dispositif de transport selon l'une quelconque des revendications 4 à 10, **caractérisé en ce que** les coulisseaux (12, 13) sont reliés par un dispositif de couplage (20) effectuant un mouvement périphérique pour effecteur la transmission de mouvement.

12. Dispositif de transport selon l'une quelconque des revendications 4 à 10, **caractérisé en ce que** le support d'outil (16) est disposé de façon à pouvoir tourner autour d'un axe de pivotement (22) au niveau du coulisseau (13) associé et est relié à l'entraînement de pivotement (26) par le biais d'un moyen de transmission (28) effectuant un mouvement périphérique.

13. Dispositif de transport selon la revendication 10 et 11, **caractérisé en ce que** les moyens de couplage et de transmission (20, 28) effectuant un mouvement périphérique sont guidés dans une boucle finie ou sans fin via des déviations (21, 29) placées au niveau des deux extrémités du tasseau portant (11).

14. Dispositif de transport selon l'une quelconque des revendications précédentes, **caractérisé en ce qu'**un dispositif de pivotement (8) comporte un moyen de transmission (28) entraîné et une roue d'entraînement (33) ainsi reliée par complémentarité de rotation à un arbre (34), l'arbre (34) étant relié aux écrous d'arbre dotés d'un corps pivotant (23) de type arbre par le biais d'un joug (35) engrené mobile dans le plan axial et les entraînant de façon pivotante.

15. Dispositif de transport selon l'une quelconque des revendications précédentes, **caractérisé en ce que** le tasseau portant (11) comportant une structure portante (15) en forme de treillis ou en forme de carter en forme de caisson dotée de passages traversants permettant d'en réduire le poids.
